(19) Europäisches Patentamt
European Patent Office
Office européen des brevets

(11)  EP 1 367 790 B1

(12)  **EUROPEAN PATENT SPECIFICATION**

(45) Date of publication and mention
of the grant of the patent:
**03.01.2007   Bulletin 2007/01**

(51) Int Cl.:
*H04L 27/26* (2006.01)        *H04L 25/03* (2006.01)

(21) Application number: **03001029.2**

(22) Date of filing: **17.01.2003**

(54) **OFDM adaptive equalizer**

OFDM Adaptiver Entzerrer

Egaliseur adaptatif pour OFDM

(84) Designated Contracting States:
**DE FR GB**

(30) Priority:  **28.05.2002   KR 2002029695**

(43) Date of publication of application:
**03.12.2003   Bulletin 2003/49**

(73) Proprietor: **SAMSUNG ELECTRONICS CO., LTD.**
**Suwon-City, Kyungki-do (KR)**

(72) Inventor: **Kim, Jae-hyon**
**Paldal-gu,**
**Suwon-city,**
**Gyunggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 998 068**        **US-A- 5 963 592**
**US-A1- 2001 015 954**

**Description**

The present invention relates to an orthogonal frequency division multiplexing (OFDM) equalizer, and more particularly, to an OFDM equalizer which can correct an error generated on a transmission channel during the transmission of an OFDM signal modulated in an OFDM method in an OFDM receiver receiving the OFDM signal.

In general, a broadcasting system of a high definition television (HDTV) is divided into an image encoding unit and a modulating unit. The image encoding unit compresses about 1Gbps of digital data from a high definition image source into 15 to 18Mbps of data. The modulating unit transmits a few tens Mbps of digital data to a reception side through 6 to 8MHz of band channels.

The digital HDTV broadcasting employs a terrestrial simultaneous broadcasting method using very high frequency (VHF)/ultra high frequency (UHF) channels allocated to the general television broadcasting.

In Europe, a digital modulation type OFDM method has been used as a next generation HDTV terrestrial broadcasting method in order to improve a data rate by bandwidths and prevent interruptions. The OFDM method transforms serially-inputted symbol columns into block unit parallel data, and multiplexes the parallel symbols into different sub-carrier frequencies.

However, the OFDM method has disadvantages in that an OFDM signal is distorted on a transmission channel according to a channel state and distortion due to a multiple path has a bad influence on the OFDM signal. Therefore, an equalizer for correcting an error on the transmission channel during restoration of the signal in a reception side is installed to overcome such distortion.

In general, the OFDM equalizer calculates an error on the transmission channel by using symbols adjacent to the Fourier-transformed OFDM signal, and corrects the error on the transmission channel of the OFDM signal. Here, the OFDM equalizer corrects the error according to a pilot signal which is a synchronous value between a transmitter and a receiver.

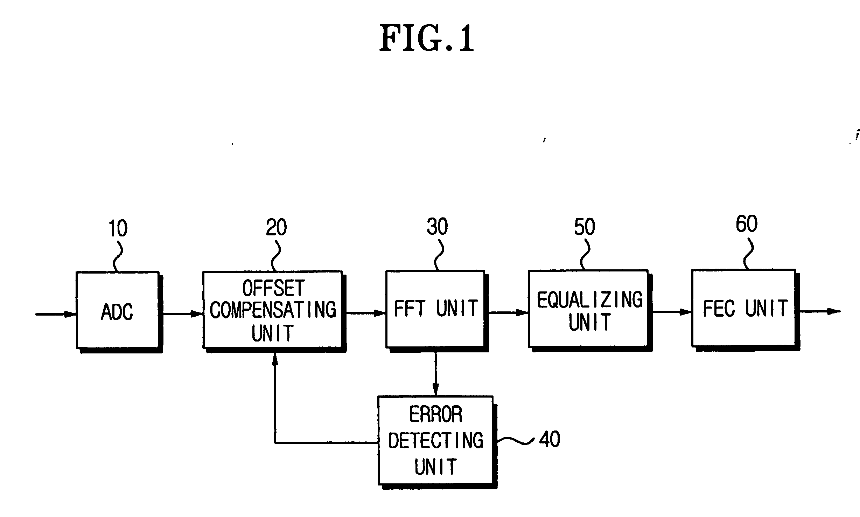

FIG. 1 is a schematic block diagram illustrating a general OFDM receiver. The OFDM receiver includes an analog to digital converter (ADC) 10, an offset compensating unit 20, a fast Fourier transform (FFT) unit 30, an error detecting unit 40, an equalizing unit 50 and a forward error correcting (FEC) unit 60.

The ADC 10 converts an input OFDM signal into a digital signal. The offset compensating unit 20 compensates for offset of a frequency, phase and time generated in reception and digital transformation of the OFDM signal. The FFT unit 30 performs the fast Fourier transform on the offset-compensated OFDM signal. The error detecting unit 40 detects offset values of the frequency, phase and time for the OFDM signal from the FFT unit 30. Here, the error detecting unit 40 provides the detected offset values to the offset compensating unit 20. Accordingly, the offset compensating unit 20 compensates for the offset of the frequency, phase and time for the OFDM signal from the ADC 10 on the basis of the offset values detected in the error detecting unit 40.

The equalizing unit 50 compensates for distortion of the OFDM signal from the FFT unit 30 on a transmission channel. Here, the equalizing unit 50 compensates for distortion in a timing and frequency of symbols of the OFDM signal through a pilot signal. The FEC unit 60 detects an error in an error detection method set up for data of the OFDM signal. On the other hand, the OFDM signal from the FFT unit 30 is an OFDM signal divided into I signal and Q signal. Thus, the equalizing unit 50 respectively equalizes the I and Q signals from the FFT unit 50.

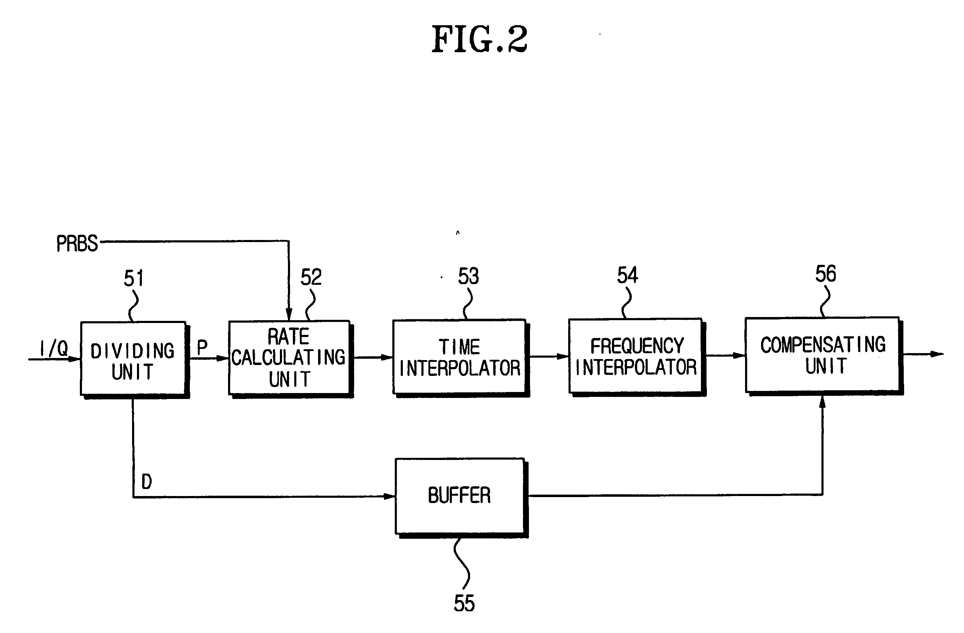

FIG. 2 is a detailed block diagram illustrating the equalizing unit 50 of FIG. 1. The equalizing unit 50 includes a dividing unit 51, a rate calculating unit 52, a time interpolator 53, a frequency interpolator 54, a buffer 55 and a compensating unit 56.

The dividing unit 51 respectively divides the I signal and the Q signal into a pilot element P and a data element D. The rate calculating unit 52 calculates a rate of the pilot P from the dividing unit 51 according to an input pseudo random binary sequence (PRBS) signal. The time interpolator 53 performs time axis interpolation on the pilot (P) corresponding to the rate from the rate calculating unit 52. The frequency interpolator 54 performs frequency axis interpolation on the time-axis interpolated pilot P from the time interpolator 53. The buffer 55 stores the data D of the I and Q signals from the dividing unit 51 for a predetermined time, and outputs the data. The compensating unit 56 compensates for distortion of the data D from the buffer 55 on the transmission channel on the basis of the pilot interpolated in the frequency interpolator 54.

However, the equalizing unit 50 interpolates the pilot by using the previously-set PRBS signal and compensates for the channel distortion of the data, without considering the state of the channel to which the OFDM signal is transmitted. Therefore, the related OFDM equalizer compensates for the channel distortion of the OFDM signal without considering the state of the channel, and thus the equalized OFDM signal has an error to an original signal. As a result, the related OFDM equalizer reduces an equalizing performance. Moreover, when values of the OFDM symbols are changed in a static state where the state of the transmission channel is not varied by time, the related OFDM equalizer cannot precisely equalize the OFDM signal.

US 5,963,592 describes an adaptive channel equalizer for use in a digital communication system that utilizes OFDM techniques.

It is the object of the present invention to provide an OFDM equalizer which can adaptively equalize an OFDM signal according to a state of a transmission channel to which the OFDM signal is transmitted.

This object is solved by the invention as claimed in the independent claim.

Preferred embodiments are specified in the dependent claims.

In accordance with an aspect of the present invention there is provided an OFDM equalizer which can stably precisely equalize an OFDM signal according to a state of a transmission channel to which the OFDM signal is transmitted.

In order to achieve the above-described object of the present invention, there is provided an OFDM equalizer including: a dividing unit for dividing the OFDM signal into a data and a pilot; a rate calculating unit for calculating a rate of the pilot for an input reference signal by multiplying the pilot by the reference signal; a plurality of time interpolators for respectively performing interpolation in a predetermined number of pilot units according to a time axis for the rate from the rate calculating unit; a channel state judging unit for judging a channel state as being either static or dynamic according to magnitude variations of the time axis-interpolated pilot; an average calculating unit for selectively calculating an average of each time axis-interpolated pilot according to the channel state; a frequency interpolator for performing interpolation according to a frequency axis on the pilot whose average is calculated in the average calculating unit and the pilot whose average is not calculated; a buffer for storing the data divided in the dividing unit for a predetermined time, and outputting the data; and a compensating unit for compensating for distortion of the data from the buffer on a transmission channel on the basis of the frequency axis-interpolated pilot.

The time interpolator includes: a first time interpolator for performing non-linear interpolation on the four pilots having the same time period on the time axis; and a second time interpolator for performing linear interpolation on the two pilots having the same time period on the time axis.

Preferably, when the channel state judged by the channel state judging unit is dynamic, the first time interpolator performs interpolation, and the average calculating unit outputs the value from the first time interpolator to the frequency interpolator, and when the channel state is static, the second time interpolator performs interpolation, and the average calculating unit calculates an average of the values from the second time interpolator, and outputs the average to the frequency interpolator.

According to the channel state judged by the channel state judging unit, the first time interpolator outputs the value obtained due to the interpolation in the dynamic channel state to the frequency interpolator, the second time interpolator outputs the value obtained due to the interpolation in the static channel state to the average calculating unit, and the average calculating unit calculates the average of the values from the second time interpolator.

The time interpolator further includes a switching unit for outputting the value interpolated in the first time interpolator in the dynamic channel state to the frequency interpolator, and outputting the value interpolated in the second time interpolator in the static channel state to the average calculating unit.

Preferably, the average calculating unit includes: a delay unit for delaying the output value corresponding to the average for a predetermined time; an operating unit for calculating the average of the output value from the delay unit and the value from the time interpolator; and an output value calculating unit for adjusting the value from the time interpolator on the basis of the average calculated in the operating unit, and outputting the resulting value to the frequency interpolator.

Preferably, the operating unit includes: a subtracting unit for subtracting the output value from the delay unit from the output value from the time interpolator; an absolute value calculating unit for calculating an absolute value of the value obtained by subtraction; and a multiplying unit for calculating a square value of the absolute value.

The channel state judging unit includes: a numerical value transforming unit for classifying and calculating the pilot interpolated in the time interpolator into a magnitude value and a phase value; and a channel state determining unit for determining the channel state by comparing the magnitude value with a previously-set threshold value, and providing the determined channel state to the time interpolator and the average calculating unit to be selectively operated according to the channel state.

In addition, the channel state determining unit includes: a difference value calculating unit for calculating the difference of a first magnitude value and a second magnitude value neighboring in time among the magnitude values calculated in the numerical value transforming unit; an accumulating unit for accumulating the difference value calculated in the difference value calculating unit in OFDM symbol units; and a determining unit for determining the channel state by comparing the accumulated value of the accumulating unit with the threshold value, and providing the result to the time interpolator and the average calculating unit. In accordance with the present invention, the reference signal is selected from +0.75 and -0.75.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a schematic block diagram illustrating a related OFDM receiver;

FIG. 2 is a detailed block diagram illustrating an equalizing unit of FIG. 1;

FIG. 3 is a block diagram illustrating an OFDM equalizer in accordance with a preferred embodiment of the present invention;

FIG. 4 is a detailed block diagram illustrating a time interpolator of FIG. 3;

FIG. 5 is a block diagram illustrating another example of the time interpolator of FIG. 3;

FIG. 6 is a block diagram illustrating another example of an average calculating unit of FIG. 3;

FIG. 7 is a block diagram illustrating the third example of the time interpolator of FIG. 3;

FIG. 8 is a detailed block diagram illustrating the average calculating unit of FIG. 3;

FIG. 9 is a detailed block diagram illustrating an operating unit of FIG. 8;

FIG. 10 is a detailed block diagram illustrating a channel state judging unit of FIG. 3; and

FIG. 11 is a detailed block diagram illustrating a channel state determining unit of FIG. 10.

An OFDM equalizer in accordance with a preferred embodiment of the present invention will now be described in detail with reference to the accompanying drawings.

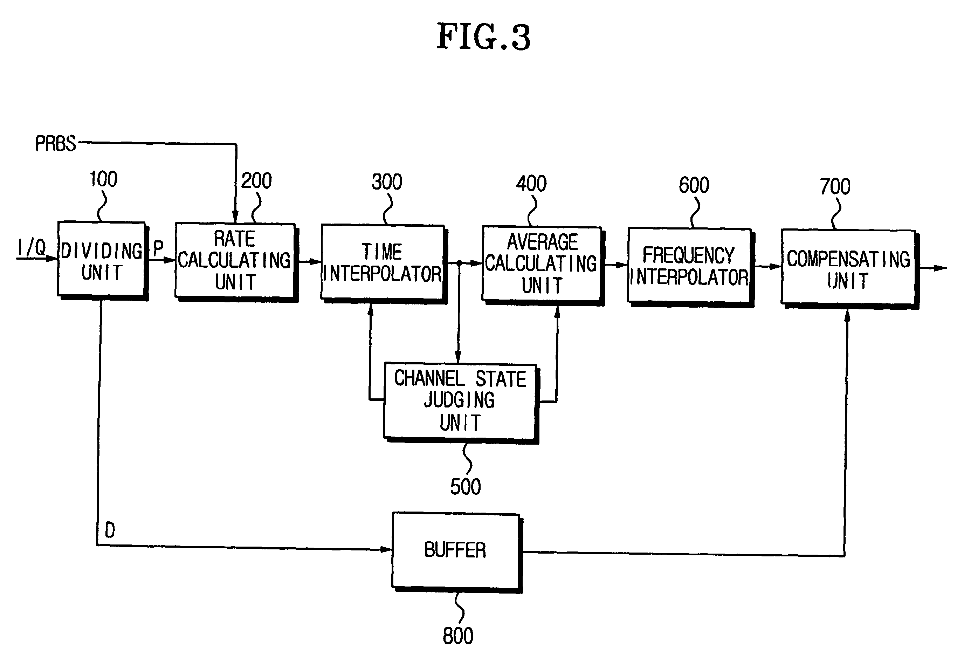

FIG. 3 is a block diagram illustrating the OFDM equalizer in accordance with the preferred embodiment of the present invention. The OFDM equalizer includes a dividing unit 100, a rate calculating unit 200, a time interpolator 300, an average calculating unit 400, a channel state judging unit 500, a frequency interpolator 600, a compensating unit 700 and a buffer 800.

The dividing unit 100 respectively divides I signal and Q signal into a pilot element P and a data element D. The rate calculating unit 200 calculates a rate of the pilot P for a pseudo random binary sequence (PRBS) signal which is an input reference signal, by multiplying the pilot P from the dividing unit 100 by the PRBS signal. Here, the PRBS reference signal is selected from +0.75 and - 0.75.

The time interpolator 300 performs interpolation in a predetermined number of pilot units according to a time axis for the pilot corresponding to the rate from the rate calculating unit 200.

The average calculating unit 400 selectively calculates an average of the pilot time axis-interpolated in the time interpolator 300 according to a channel state. The channel state judging unit 500 judges the channel state according to magnitude variations of the pilot time axis-interpolated in the time interpolator 300. The channel state judging unit 500 provides the channel state information to the time interpolator 300 and the average calculating unit 400. Accordingly, the time interpolator 300 and the average calculating unit 400 performs corresponding operations according to the channel state information.

The frequency interpolator 600 performs frequency axis interpolation on the pilot whose average is calculated in the average calculating unit 400 and the pilot whose average is not calculated among the pilots from the time interpolator 300.

The buffer 800 stores the data D of the I and Q signals divided by the dividing unit 100 for a predetermined time, and outputs the data D. The compensating unit 700 compensates for distortion of the data from the buffer 800 on a transmission channel on the basis of the pilot interpolated in the frequency interpolator 600 according to the frequency axis.

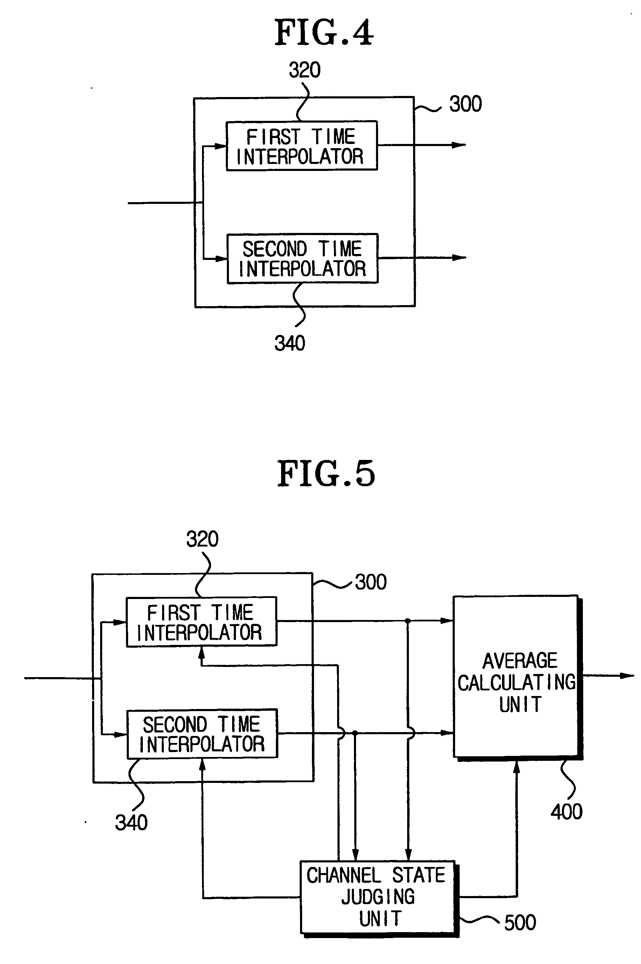

FIG. 4 is a detailed block diagram illustrating the time interpolator 300 of FIG. 3. The time interpolator 300 includes a first time interpolator 320 and a second time interpolator 340. In this embodiment, the first time interpolator 320 performs non-linear interpolation on the four pilots having the same time period on the time axis, and the second time interpolator 340 performs linear interpolation on the two pilots having the same time period on the time axis. Therefore, when the channel state information from the channel state judging unit 500 has a dynamic state varied by time, the average calculating unit 400 outputs the interpolation value interpolated in the first time interpolator 320 to the frequency interpolator 600 without transforming the signal. In addition, when the channel state information from the channel state judging unit 500 has a static state which is not varied by time, the average calculating unit 400 calculates an average of the values interpolated in the second time interpolator 340, and outputs the resulting value to the frequency interpolator 600.

FIG. 5 is a block diagram illustrating another example of the time interpolator 300 of FIG. 3. When the channel state information from the channel state judging unit 500 has the dynamic state, the first time interpolator 320 interpolates the input pilot. In the case that the channel state information from the channel state judging unit 500 has the static state, the second time interpolator 340 interpolates the input pilot. Accordingly, when the channel state information from the channel state judging unit 500 has the dynamic state, the first time interpolator 320 interpolates the input pilot, and thus the average calculating unit 400 outputs the interpolation value from the first time interpolator 320 to the frequency interpolator 600 without transforming the signal. In addition, when the channel state information from the channel state judging unit 500 has the static state, the second time interpolator 340 interpolates the input pilot, and thus the average calculating unit 400 calculates an average of the interpolation values from the second time interpolator 340, and outputs the average to the frequency interpolator 600.

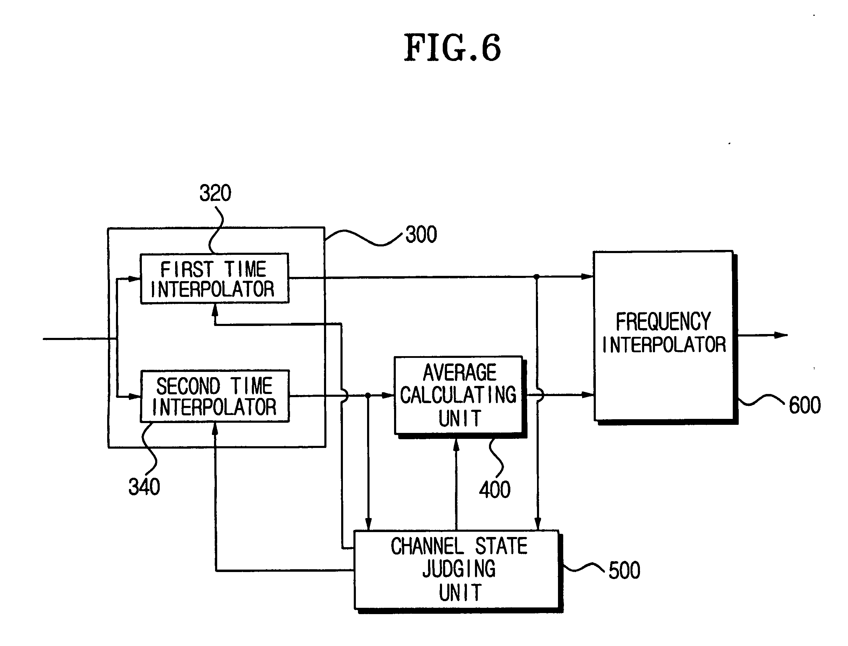

FIG. 6 is a block diagram illustrating another example of the average calculating unit 400 of FIG. 3. Referring to FIG. 6, in accordance with the channel state information provided by the channel state judging unit 500, the first time interpolator 320 performs interpolation in the dynamic channel state, and the second interpolator 340 performs interpolation in the static channel state.

Therefore, the first time interpolator 320 outputs the interpolation value to the frequency interpolator 600. The average calculating unit 400 is positioned between the second time interpolator 340 and the frequency interpolator 600, for calculating an average of the interpolation values interpolated in the second time interpolator 340 and outputting the average to the frequency interpolator 600.

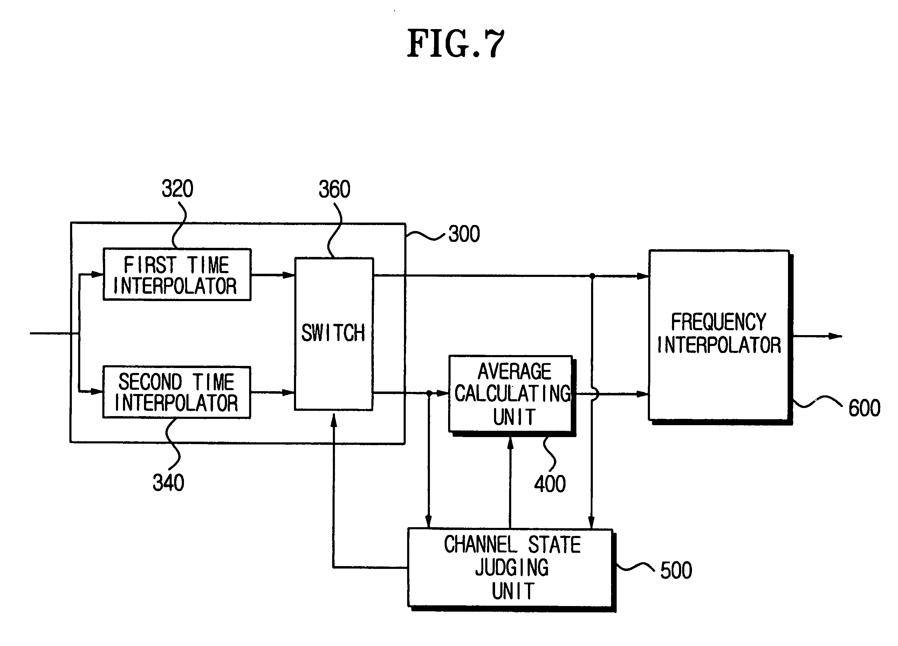

FIG. 7 is a block diagram illustrating the third example of the time interpolator 300 of FIG. 3. As illustrated in FIG. 7, the time interpolator 300 includes a first time interpolator 320, a second time interpolator 340 and a switch 360.

The first and second time interpolators 320 and 340 are operated as described above with reference to FIG. 4. When the channel state information from the channel state judging unit 500 has the dynamic state, the switch 360 outputs the interpolation value interpolated in the first time interpolator 320 to the frequency interpolator 600. In addition, when the channel state information from the channel state judging unit 500 has the static state, the switch 360 outputs the interpolation value interpolated in the second time interpolator 340 to the average calculating unit 400.

Accordingly, the interpolation is selectively performed by using the first time interpolator 320 having high performance in the dynamic channel state and the second time interpolator 340 having high performance in the static channel state. In the static state, the average of the interpolation values interpolated in the second time interpolator 340 is calculated and interpolated according to the frequency axis, thereby adaptively precisely equalizing the OFDM signal according to the channel state.

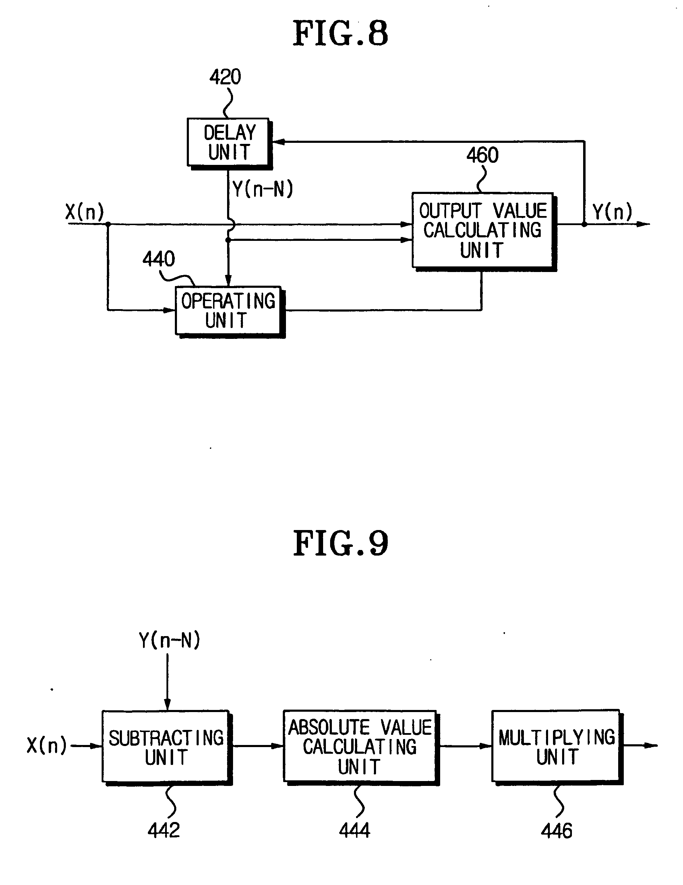

FIG. 8 is a detailed block diagram illustrating the average calculating unit 400 of FIG. 3. The average calculating unit 400 includes a delay unit 420, an operating unit 440 and an output value calculating unit 460.

The delay unit 420 receives an n-th average outputted to the frequency interpolator 600, stores the average for a predetermined time, and outputs it. The operating unit 440 calculates an average of the n-th average $Y(n-N)$ delayed in the delay unit 420 for N and the n-th interpolation value $X(n)$ interpolated in the second time interpolator 340 of the time interpolator 400. The output value calculating unit 460 adjusts the n-th interpolation value interpolated in the second time interpolator 340 on the basis of the average calculated in the operating unit 440 and the average $Y(n-N)$ outputted from the delay unit 420, and outputs the resulting value to the frequency interpolator 600.

When it is presumed that the n-th interpolation value interpolated in the second time interpolator 340 is $X(n)$ and the signal outputted from the output value calculating unit 460 for $X(n)$ is $Y(n)$, the delay unit 420 stores the signal $Y(n)$ from the output value calculating unit 460, delays the output for N, and outputs the average $Y(n-N)$ delayed for N to the operating unit 440.

FIG. 9 is a detailed block diagram illustrating the operating unit 440 of FIG. 8. The operating unit 440 includes a subtracting unit 442, an absolute value calculating unit 444 and a multiplying unit 446. The subtracting unit 442 subtracts the average $Y(n-N)$ outputted from the delay unit 420 from the interpolation value $X(n)$ interpolated in the second time interpolator 340 as shown in following Formula 1:

$$\text{<Formula 1>}$$

$$d(n) = X(n) - Y(n-N)$$

The absolute value calculating unit 444 calculates an absolute value of the value $d(n)$ calculated in Formula 1 as shown in following Formula 2:

$$\text{<Formula 2>}$$

$$D(n) = |d(n)|$$

The multiplying unit 446 calculates a square value of the absolute value $D(n)$ calculated in Formula 2 as shown in following Formula 3. Here, the multiplying unit 446 provides the square value $H(n)$ to the output value calculating unit 460.

<Formula 3>

$$H(n) = D(n)^2$$

Accordingly, when the output value calculating unit 460 receives the square value H(n) from the multiplying unit 446, the output value calculating unit 460 compares the square value H(n) with a previously-set coefficient A as shown in following Formula 4, and sets up an output value:

<Formula 4>

$$\Gamma(n) = 1 \qquad (H(n) > A) \quad ……………… \square$$

$$\Gamma(n) = C \times H(n) \qquad (H(n) \leq A) \quad ……………… \square$$

When the square value H(n) is greater than the coefficient A, the output value calculating unit 460 sets up the weight $\Gamma(n)$ to be '1'. Therefore, the output value calculating unit 460 outputs the interpolation value X(n) from the second time interpolator 340 to the frequency interpolator 600 without transformation.

On the other hand, when the square value H(n) is equal to or smaller than the coefficient A, the output value calculating unit 460 sets up the weight $\Gamma(n)$ to be 'C × H(n)'. Here, the coefficient A is a constant serving as an amplitude limiter. Accordingly, the output value calculating unit 460 transforms the interpolation value X(n) interpolated in the second time interpolator 340 as shown in following Formula 5, and outputs the transformed value to the frequency interpolator 600:

<Formula 5>

$$Y(n) = \Gamma(n)X(n) + (1 - \Gamma(n))Y(n - N)$$

Here, $\Gamma(n)$ is C × H(n).

That is, the output value calculating unit 460 provides the weight of $\Gamma(n)$ to the current input signal X(n) and the weight of 1-$\Gamma(n)$ to the signal Y(n-N) delayed in the delay unit 420, thereby calculating different output values for each symbol of the OFDM signal. As a result, the output value calculating unit 460 adds the value 1-$\Gamma(n)$Y(n-N) obtained by multiplying 1-$\Gamma(n)$ by Y(n-N) to the value $\Gamma(n)$X(n) obtained by multiplying $\Gamma(n)$ by X(n), and outputs the resulting value Yn to the frequency interpolator 600.

Accordingly, the weight of the input signal is variably applied by calculating the average of the previously-inputted signal and the current input signal and comparing the calculated average with the previously-set value. It is thus possible to remove noise existing in the whole frequency bands due to variations of the transmission channel environment and to precisely equalize the OFDM signal.

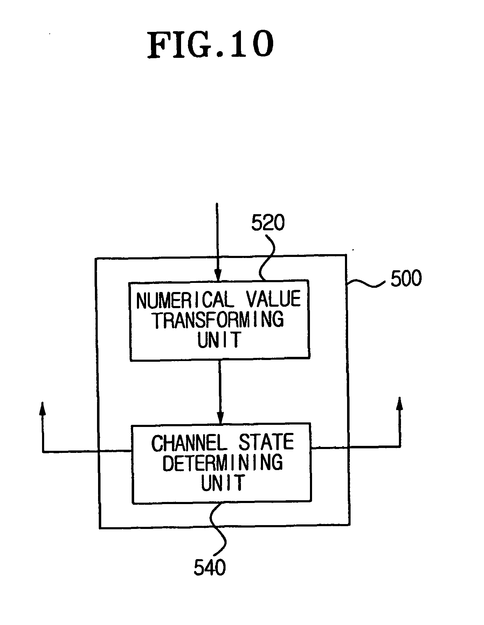

FIG. 10 is a detailed block diagram illustrating the channel state judging unit 500 of FIG. 3. The channel state judging unit 500 includes a numerical value transforming unit 520 and a channel state determining unit 540. The numerical value calculating unit 520 classifies the pilot of the I and Q signals interpolated in the time interpolator 300 into a magnitude value and a phase value.

The channel state determining unit 540 compares the magnitude value calculated in the numerical value transforming unit 520 with a previously-set threshold value T, and determines the channel state according to variations of the magnitude value. Here, the channel state determining unit 540 provides the channel state information to the time interpolator 300 and the average calculating unit 400 to be selectively operated according to the channel state information.

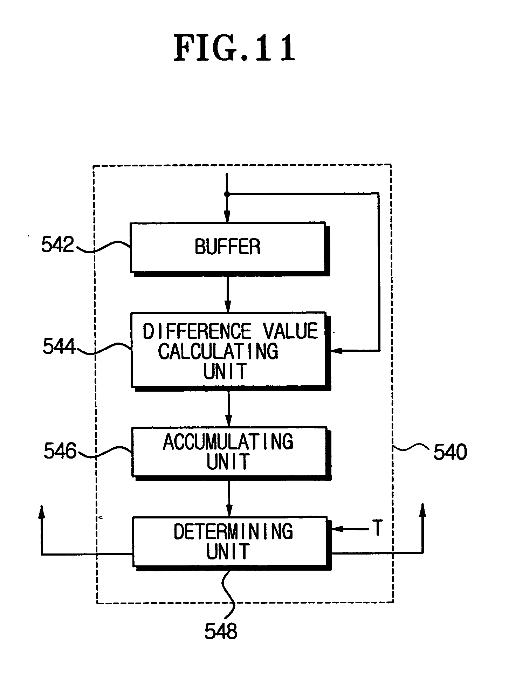

FIG. 11 is a detailed block diagram illustrating the channel state determining unit 540 of FIG. 10. The channel state determining unit 540 includes a buffer 542, a difference value calculating unit 544, an accumulating unit 546 and a determining unit 548.

In regard to first and second magnitude values which are outputted from the numerical value transforming unit 520 and neighbor in time, the buffer 542 stores the previously-inputted first magnitude value until the second magnitude value is inputted. The difference value calculating unit 544 calculates the difference of the first magnitude value and the second magnitude value. The accumulating unit 546 accumulates the difference value calculated in the difference value calculating unit 544 in OFDM symbol units. The determining unit 548 determines the channel state by comparing the accumulated value of the accumulating unit 546 with the threshold value T. Here, the determining unit 548 provides the channel state information to the time interpolator 300 and the average calculating unit 400.

In accordance with the present invention, the interpolation is selectively performed by using the first time interpolator having high performance in the dynamic channel state and the second time interpolator having high performance in the static channel state. In the static state, the average of the interpolation values interpolated in the second time interpolator is calculated and interpolated according to the frequency axis, thereby adaptively precisely equalizing the OFDM signal according to the channel state.

Moreover, the weight of the input signal is variably applied by calculating the average of the previously-inputted signal and the current input signal and comparing the calculated average with the previously-set value. It is thus possible to remove noise existing in the whole frequency bands due to variations of the transmission channel environment and to precisely equalize the OFDM signal.

**Claims**

1. An OFDM equalizer comprising:

   a dividing unit (100) for dividing the OFDM signal into a data and a pilot;
   a rate calculating unit (200) for calculating a rate of the pilot for an input reference signal by multiplying the pilot by the reference signal;
   a plurality of time interpolators (300, 320, 340) for respectively performing interpolation in a predetermined number of pilot units according to a time axis for the rate from the rate calculating unit;
   a channel state judging unit (500) for judging a channel state as being either static or dynamic according to magnitude variations of the time axis-interpolated pilot;
   an average calculating unit (400) for selectively calculating an average of the time axis-interpolated pilot output from one of the plurality of time interpolators, selected according to the judged channel state;
   a frequency interpolator (600) for performing interpolation according to a frequency axis on the pilot whose average is calculated in the average calculating unit and the pilot whose average is not calculated;
   a buffer (800) for storing the data divided in the dividing unit for a predetermined time, and outputting the data; and
   a compensating unit (700) for compensating for distortion of the data from the buffer on a transmission channel on the basis of the frequency axis-interpolated pilot.

2. The OFDM equalizer according to claim 1, wherein the time interpolator comprises:

   a first time interpolator (320) for performing non-linear interpolation on four pilots having the same time period on the time axis; and
   a second time interpolator (340) for performing linear interpolation on two pilots having the same time period on the time axis.

3. The OFDM equalizer according to claim 2, wherein, when the channel state judged by the channel state judging unit is dynamic, the first time interpolator performs interpolation, and the average calculating unit outputs the value from the first time interpolator to the frequency interpolator, and when the channel state is static, the second time interpolator performs interpolation, and the average calculating unit calculates an average of the values from the second time interpolator, and outputs the average to the frequency interpolator.

4. The OFDM equalizer according to claim 2, wherein, according to the channel state judged by the channel state judging unit, the first time interpolator outputs the value obtained due to the interpolation in the dynamic channel state to the frequency interpolator, the second time interpolator outputs the value obtained due to the interpolation in the static channel state to the average calculating unit, and the average calculating unit calculates the average of the values from the second time interpolator.

**5.** The OFDM equalizer according to claim 2, wherein the time interpolator further comprises a switching unit (360) for outputting the value interpolated in the first time interpolator in the dynamic channel state to the frequency interpolator, and outputting the value interpolated in the second time interpolator in the static channel state to the average calculating unit.

**6.** The OFDM equalizer according to claim 5, wherein the average calculating unit comprises:

a delay unit (420) for delaying the output value corresponding to the average for a predetermined time;
an operating unit (440) for calculating the average of the output value from the delay unit and the value from the time interpolator; and
an output value calculating unit (460) for adjusting the value from the time interpolator on the basis of the average calculated in the operating unit, and outputting the resulting value to the frequency interpolator.

**7.** The OFDM equalizer according to claim 6, wherein the operating unit comprises:

a subtracting unit (442) for subtracting the output value from the delay unit from the output value from the time interpolator;
an absolute value calculating unit (444) for calculating an absolute value of the value obtained by subtraction; and
a multiplying unit (446) for calculating a square value of the absolute value.

**8.** The OFDM equalizer according to any of claims 1 to 7, wherein the channel state judging unit comprises:

a numerical value transforming unit (520) for classifying and calculating the pilot interpolated in the time interpolator into a magnitude value and a phase value; and
a channel state determining unit (540) for determining the channel state by comparing the magnitude value with a previously-set threshold value, and providing the determined channel state to the time interpolator and the average calculating unit to be selectively operated according to the channel state.

**9.** The OFDM equalizer according to claim 8, wherein the channel state determining unit comprises:

a difference value calculating unit (544) for calculating the difference of a first magnitude value and a second magnitude value neighboring in time among the magnitude values calculated in the numerical value transforming unit;
an accumulating unit (546) for accumulating the difference value calculated in the difference value calculating unit in OFDM symbol units; and
a determining unit (548) for determining the channel state by comparing the accumulated value of the accumulating unit with the threshold value, and providing the result to the time interpolator and the average calculating unit.

**10.** The OFDM equalizer according to claim 1, wherein the reference signal is selected from +0.75 and -0.75.


**Patentansprüche**

**1.** OFDM-Equalizer, der umfasst:

eine Teileinheit (100) zum Teilen des OFDM-Signals in ein Daten-Element und ein Pilot-Element;
eine Raten-Berechnungseinheit (200) zum Berechnen einer Rate des Pilot-Elementes für ein Eingangs-Bezugssignal durch Multiplizieren des Pilot-Elementes mit dem Bezugssignal;
eine Vielzahl von Zeit-Interpolationseinrichtungen (300, 320, 340), die jeweils Interpolation in einer vorgegebenen Anzahl von Pilot-Einheiten entsprechend einer Zeitachse für die Rate von der Raten-Berechnungseinrichtung durchführen;
eine Kanalstatus-Feststelleinheit (500), die entsprechend Größenänderungen des entsprechend der Zeitachse interpolierten Pilot-Elementes feststellt, ob ein Kanalstatus entweder statisch oder dynamisch ist;
eine Mittelwert-Berechnungseinheit (400) zum selektiven Berechnen eines Mittelwertes des entsprechend der Zeitachse interpolierten Pilot-Elementes, das von einer der Vielzahl von Zeit-Interpoliereinrichtungen ausgegeben wird, die entsprechend dem festgestellten Kanalstatus ausgewählt wird;
eine Frequenz-Interpoliereinrichtung (600) zum Durchführen von Interpolation des Pilot-Elementes, dessen Mittelwert in der Mittelwert-Berechnungseinheit berechnet wird, und des Pilot-Elementes, dessen Mittelwert nicht berechnet wird, entsprechend einer Frequenzachse;

einen Puffer (800) zum Speichern der in der Teileinheit geteilten Daten über eine vorgegebene Zeit und zum Ausgeben der Daten; und

eine Kompensiereinheit (700) zum Kompensieren von Verzerrung der Daten aus dem Puffer auf einem Sendekanal auf Basis des entsprechend der Frequenzachse interpolierten Pilot-Elementes.

2. OFDM-Equalizer nach Anspruch 1, wobei die Zeit-Interpoliereinrichtung umfasst:

eine erste Zeit-Interpoliereinrichtung (320) zum Durchführen nicht linearer Interpolation von vier Pilot-Elementen mit der gleichen Zeitperiode auf der Zeitachse; und

eine zweite Zeit-Interpoliereinrichtung (340) zum Durchführen linearer Interpolation von zwei Pilot-Elementen mit der gleichen Zeitperiode auf der Zeitachse.

3. OFDM-Equalizer nach Anspruch 2, wobei, wenn der durch die Kanalstatus-Feststelleinheit festgestellte Kanalstatus dynamisch ist, die erste Zeit-Interpoliereinrichtung Interpolation durchführt und die Mittelwert-Berechnungseinheit den Wert von der ersten Zeit-Interpoliereinrichtung an die Frequenz-Interpoliereinrichtung ausgibt, und, wenn der Kanalstatus statisch ist, die zweite Zeit-Interpoliereinrichtung Interpolation durchführt und die Mittelwert-Berechnungseinrichtung einen Mittelwert der Werte von der zweiten Zeit-Interpoliereinrichtung berechnet und den Mittelwert an die Frequenz-Interpoliereinrichtung ausgibt.

4. OFDM-Equalizer nach Anspruch 2, wobei entsprechend dem durch die Kanalstatus-Feststelleinheit festgestellten Kanalstatus die erste Zeit-Interpoliereinrichtung den aufgrund der Interpolation in dem dynamischen Kanalstatus ermittelten Wert an die Frequenz-Interpoliereinrichtung ausgibt, die zweite Zeit-Interpoliereinrichtung den aufgrund der Interpolation in dem statischen Kanalstatus ermittelten Wert an die Mittelwert-Berechnungseinheit ausgibt und die Mittelwert-Berechnungseinheit den Mittelwert der Werte von der zweiten Zeit-Interpoliereinrichtung berechnet.

5. OFDM-Equalizer nach Anspruch 2, wobei die Zeit-Interpoliereinrichtung des Weiteren eine Schalteinheit (360) umfasst, die den in der ersten Zeit-Interpoliereinrichtung in dem dynamischen Kanalstatus interpolierten Wert an die Frequenz-Interpoliereinrichtung ausgibt und den in der zweiten Zeit-Interpoliereinrichtung in dem statischen Kanalstatus interpolierten Wert an die Mittelwert-Berechnungseinheit ausgibt.

6. OFDM-Equalizer nach Anspruch 5, wobei die Mittelwert-Berechnungseinrichtung umfasst:

eine Verzögerungseinheit (420) zum Verzögern des Ausgangswertes, der dem Mittelwert entspricht, um eine vorgegebene Zeit;

eine Operationseinheit (440) zum Berechnen des Mittelwertes des Ausgangswertes von der Verzögerungseinheit und des Wertes von der Zeit-Interpoliereinrichtung; und

eine Ausgangswert-Berechnungseinheit (460) zum Regulieren des Wertes von der Zeit-Interpoliereinrichtung auf Basis des in der Operationseinheit berechneten Mittelwertes und zum Ausgeben des resultierenden Wertes an die Frequenz-Interpoliereinrichtung.

7. OFDM-Equalizer nach Anspruch 6, wobei die Operationseinheit umfasst:

eine Subtrahiereinheit (442) zum Subtrahieren des Ausgangswertes von der Verzögerungseinheit von dem Ausgangswert von der Zeit-Interpoliereinrichtung;

eine Absolutwert-Berechnungseinheit (444) zum Berechnen eines Absolutwertes des durch Subtraktion ermittelten Wertes; und

eine Multipliziereinheit (446) zum Berechnen eines Quadratwertes des Absolutwertes.

8. OFDM-Equalizer nach einem der Ansprüche 1 bis 7, wobei die Kanalstatus-Feststelleinheit umfasst:

eine Transformiereinheit (520) für numerische Werte zum Klassifizieren und Berechnen des in der Zeit-Interpoliereinrichtung interpolierten Pilot-Elementes in einen Betragswert und einen Phasenwert; und

eine Kanalstatus-Bestimmungseinheit (540) zum Bestimmen des Kanalstatus durch Vergleichen des Betragswertes mit einem zuvor eingestellten Schwellenwert und zum Bereitstellen des bestimmten Kanalstatus für die Zeit-Interpoliereinrichtung und die Mittelwert-Berechnungseinrichtung zur selektiven Verarbeitung entsprechend dem Kanalstatus.

**9.** OFDM-Equalizer nach Anspruch 8, wobei die Kanalstatus-Bestimmungseinheit umfasst:

eine Differenzwert-Berechnungseinheit (544) zum Berechnen der Differenz eines ersten Betragswertes und eines zeitlich benachbarten zweiten Betragswertes aus den in der Transformiereinheit für numerische Werte berechneten Betragswerten;
eine Akkumuliereinheit (546) zum Akkumulieren des in der Differenzwert-Berechnungseinheit berechneten Differenzwertes in OFDM-Symboleinheiten; und
eine Bestimmungseinheit (548) zum Bestimmen des Kanalzustandes durch Vergleichen des akkumulierten Wertes der Akkumuliereinheit mit dem Schwellenwert und zum Bereitstellen des Ergebnisses für die Zeit-Interpoliereinrichtung sowie die Mittelwert-Berechnungseinrichtung.

**10.** OFDM-Equalizer nach Anspruch 1, wobei das Bezugssignal aus +0,75 und -0,75 ausgewählt wird.

## Revendications

**1.** Egaliseur OFDM comprenant:

une unité de division (100) pour diviser le signal OFDM en une donnée et un pilote;
une unité de calcul de débit (200) pour calculer un débit du pilote pour un signal de référence d'entrée en multipliant le pilote pat le signal de référence ;
une pluralité d'interpolateurs temporels (300, 320, 340) pour effectuer respectivement une interpolation dans un nombre prédéterminé d'unités de pilote selon un axe de temps pour le débit à partir de l'unité de calcul de débit ;
une unité d'évaluation d'état de voie (500) pour évaluer l'état d'une voie comme étant soit statique, soit dynamique, selon les variations d'amplitude du pilote interpolé sur l'axe de temps ;
une unité de calcul de moyenne (400) pour calculer sélectivement une moyenne du pilote interpolé sur l'axe de temps délivré en sortie de l'un des interpolateurs temporels, choisi en fonction de l'état de voie évalué ;
un interpolateur fréquentiel (600) pour effectuer une interpolation selon un axe de fréquence sur le pilote dont la moyenne est calculée dans l'unité de calcul de moyenne et le pilote dont la moyenne n'est pas calculée ;
un tampon (800) pour stocker les données divisées dans l'unité de division pendant une durée prédéterminée, et délivrer en sortie les données ; et
une unité de compensation (700) pour compenser la distorsion des données provenant du tampon sur une voie de transmission en se basant sur le pilote interpolé sur l'axe de fréquence.

**2.** Egaliseur OFDM selon la revendication 1, dans lequel l'interpolateur temporel comprend :

un premier interpolateur temporel (320) pour effectuer une interpolation non linéaire sur quatre pilotes ayant la même période temporelle sur l'axe de temps ; et
un second interpolateur temporel (340) pour effectuer une interpolation linéaire sur deux pilotes ayant la même période temporelle sur l'axe de temps.

**3.** Egaliseur OFDM selon la revendication 2, dans lequel, quand l'état de voie évalué par l'unité d'évaluation d'état de voie est dynamique, le premier interpolateur temporel effectue une interpolation, et l'unité de calcul de moyenne transmet la valeur du premier interpolateur temporel à l'interpolateur fréquentiel, et quand l'état de voie est statique, le second interpolateur temporel effectue une interpolation, et l'unité de calcul de moyenne calcule une moyenne des valeurs provenant du second interpolateur temporel, et délivre en sortie cette moyenne à l'interpolateur fréquentiel.

**4.** Egaliseur OFDM selon la revendication 2, dans lequel, en fonction de l'état de voie évalué par l'unité d'évaluation d'état de voie, le premier interpolateur temporel délivre en sortie la valeur obtenue suite à l'interpolation dans l'état de voie dynamique à l'interpolateur fréquentiel, le second interpolateur temporel délivre en sortie la valeur obtenue suite à l'interpolation dans l'état de voie statique à l'unité de calcul de moyenne, et l'unité de calcul de moyenne calcule la moyenne des valeurs provenant du second interpolateur temporel.

**5.** Egaliseur OFDM selon la revendication 2, dans lequel l'interpolateur temporel comprend en outre une unité de commutation (360) pour délivrer en sortie la valeur interpolée dans le premier interpolateur temporel dans l'état de voie dynamique à l'interpolateur fréquentiel, et pour délivrer en sortie la valeur interpolée dans le second interpolateur temporel dans l'état de voie statique à l'unité de calcul de moyenne.

**6.** Egaliseur OFDM selon la revendication 5, dans lequel l'unité de calcul de moyenne comprend :

une unité à retard (420) pour retarder la valeur de sortie qui correspond à la moyenne pendant une durée prédéterminée ;
une unité d'opération (440) pour calculer la moyenne de la valeur de sortie provenant de l'unité à retard et de la valeur provenant de l'interpolateur temporel ; et
une unité de calcul de valeur de sortie (460) pour ajuster la valeur provenant de l'interpolateur temporel d'après la moyenne calculée dans l'unité d'opération, et pour délivrer en sortie la valeur résultante à l'interpolateur fréquentiel.

**7.** Egaliseur OFDM selon la revendication 6, dans lequel l'unité d'opération comprend :

une unité de soustraction (442) pour soustraire la valeur de sortie de l'unité à retard de la valeur de sortie de l'interpolateur temporel ;
une unité de calcul de valeur absolue (444) pour calculer une valeur absolue de la valeur obtenue par soustraction ; et
une unité de multiplication (446) pour calculer une valeur de carré de la valeur absolue.

**8.** Egaliseur OFDM selon l'une quelconque des revendications 1 à 7, dans lequel l'unité d'évaluation d'état de voie comprend :

une unité de transformation de valeur numérique (520) pour classer et calculer le pilote interpolé dans l'interpolateur temporel afin d'obtenir une valeur d'amplitude et une valeur de phase ; et
une unité de détermination d'état de voie (540) pour déterminer l'état de voie en comparant la valeur d'amplitude avec une valeur de seuil choisie au préalable, et pour fournir l'état de voie déterminé à l'interpolateur temporel et à l'unité de calcul de moyenne pour qu'ils soient utilisés sélectivement en fonction de l'état de voie.

**9.** Egaliseur OFDM selon la revendication 8, dans lequel l'unité de détermination d'état de voie comprend :

une unité de calcul de valeur de différence (544) pour calculer la différence d'une première valeur d'amplitude et d'une seconde valeur d'amplitude proches dans le temps parmi les valeurs d'amplitude calculées dans l'unité de transformation de valeur numérique ;
une unité d'accumulation (546) pour accumuler la valeur de différence calculée dans l'unité de calcul de valeur de différence dans des unités de symboles OFDM ; et
une unité de détermination (548) pour déterminer l'état de voie en comparant la valeur accumulée de l'unité d'accumulation avec la valeur de seuil, et pour fournir le résultat à l'interpolateur temporel et à l'unité de calcul de moyenne.

**10.** Egaliseur OFDM selon la revendication 1, dans lequel le signal de référence est choisi parmi +0,75 et -0,75.

# FIG.1

EP 1 367 790 B1

# FIG.2

PRBS

I/Q → **51 DIVIDING UNIT** → P → **52 RATE CALCULATING UNIT** → **53 TIME INTERPOLATOR** → **54 FREQUENCY INTERPOLATOR** → **56 COMPENSATING UNIT** →

D → **55 BUFFER** →

EP 1 367 790 B1

# FIG.3

# FIG.4

# FIG.5

# FIG.6

# FIG.7

EP 1 367 790 B1

# FIG.8

420

DELAY
UNIT

Y(n-N)

460

X(n)

OUTPUT VALUE
CALCULATING
UNIT

Y(n)

440

OPERATING
UNIT

# FIG.9

Y(n-N)

X(n) → SUBTRACTING
UNIT → ABSOLUTE VALUE
CALCULATING
UNIT → MULTIPLYING
UNIT →

442

444

446

# FIG.10

520

500

```
┌─────────────────────┐
│  NUMERICAL VALUE    │
│    TRANSFORMING     │
│       UNIT          │
└─────────────────────┘
```

```
┌─────────────────────┐
│  CHANNEL STATE      │
│   DETERMINING       │
│       UNIT          │
└─────────────────────┘
```

540

# FIG.11

542 — BUFFER

544 — DIFFERENCE VALUE CALCULATING UNIT

546 — ACCUMULATING UNIT

548 — DETERMINING UNIT ← T

540